# EUROPEAN PATENT SPECIFICATION

(11) **EP 0 668 248 B1**
(45) Date of publication and mention of the grant of the patent: **31.05.2000**
(21) Application number: 95102255.7
(22) Date of filing: 17.02.1995
(51) Int. Cl.: C03B 7/00, C03B 9/41, C03B 7/086, C03B 7/10, C03B 7/16, C03B 7/08

(54) **Plant for forming glass articles**
Vorrichtung zur Herstellung von Glasgegenständen
Dispositif pour faire des objets en verre

(30) Priority: 18.02.1994 IT TO940100
(43) Date of publication of application: 23.08.1995
(73) Proprietor: BOTTERO S.p.A., 12100 Roata Canale (Cuneo) (IT)
(72) Inventor: Sesia, Carlo, I-12011 Borgo San Dalmazzo (IT); Tealdi, Alessandro, I-12089 Villanova Mondovi' (IT); Viada, Bruno, I-12010 Madonna Delle Grazie (IT); Giraudo, Vittore, I-12100 Cuneo (IT)
(74) Representative: Jorio, Paolo, Dr. Ing.

(56) References cited:
- EP-A- 0 180 394
- EP-A- 0 488 136
- EP-A- 0 603 771
- DE-A- 2 334 431
- US-A- 1 955 869
- US-A- 2 950 571
- US-A- 4 708 729

## Description

The present invention relates to a plant for forming glass articles.

More particularly, the present invention relates to a plant for forming glass articles of the type including a first forming unit for forming and advancing a succession of glass gobs and a unit for distributing and conveying the glass gobs formed to a second forming unit which, in turn, forms each glass gob into a respective glass article.

Normally, in known forming plants of the type described above, the first forming unit is controlled by its own central piloting unit as shown, for example, in US-A-4,708,729 to form a continuous, orderly succession of glass gobs which are identical to each other in terms of weight and geometry while the second forming unit, in most cases, includes a plurality of forming sections which are structurally and functionally identical to each other and are each adapted to receive respective glass gobs and to form continuous successions of glass articles which are the same as each other in weight, shape and dimensions.

The known plants of the type described above, although in universal use for the large scale production of articles, because of their bulk and relatively high cost, are not satisfactory for those uses in which several batches of different products need to be made, each batch containing a relatively small number of articles. This problem results essentially from the fact that, as just explained, known forming plants generally include a fairly large number of forming sections which, as is known, take a fairly long time to assemble and put into operation, against which, however, they are used for a relatively short period of time before they must be reequipped and adapted to make new articles. The adaptation of such plants is not only extremely expensive due to the need to acquire and replace a relatively large number of components of the forming sections but also because it is also essential to adapt the corresponding units for forming the glass gobs, the central piloting units of which must be reprogrammed to accord with the new article to be produced.

US-A-1,955,869 discloses an apparatus for feeding different gobs of molten glass. The apparatus enables to realise a restricted number of glass gobs having predetermined features. The prior art portion of claim 1 is based on this document.

The object of the present invention is to provide a plant for forming glass articles which enables the problems explained above to be resolved simply and economically while at the same time being simple and economic to manufacture.

According to the present invention, there is provided a plant for forming glass articles as defined in claim 1.

The invention thus enables the manufacture of an endless number of different gobs, without the use of mechanical stop means and a complicated adjustment means therefore.

The invention will now be described with reference to the appended drawings, which illustrate one non-limitative embodiment, in which:
Figure 1 illustrates schematically and in side elevation, a preferred embodiment of the plant for forming glass articles according to the present invention; and
Figures 2 and 3 are respective space-time graphs showing different movement profiles of an extrusion plunger of the plant of Figure 1.

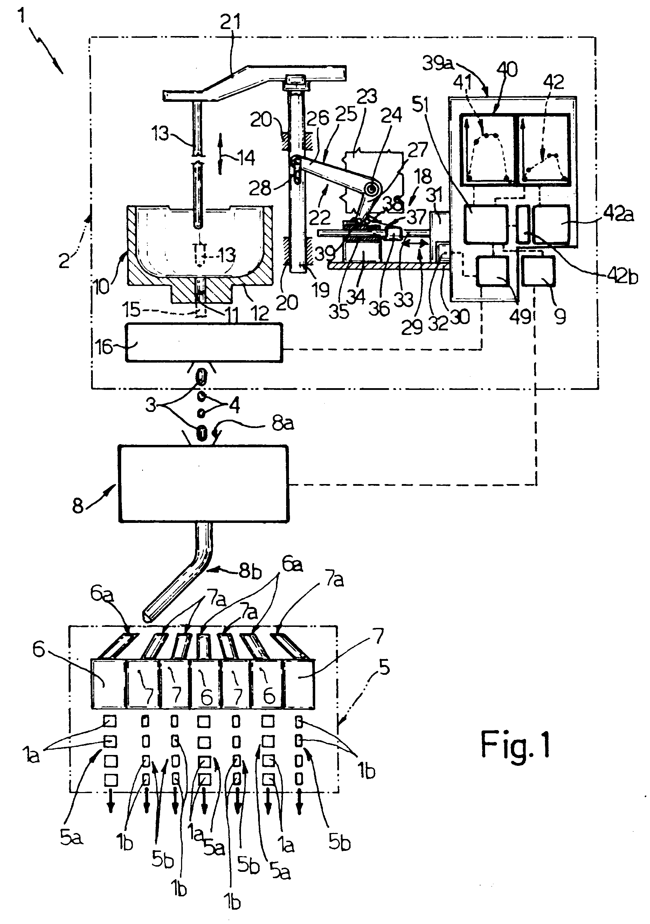

In Figure 1, a plant for the simultaneous formation of different glass articles is generally indicated 1. In the particular embodiment described, the plant 1 is adapted to produce a plurality of first articles and a plurality of second articles, indicated 1a and 1b respectively, of which the articles 1b are different from the articles 1a in shape, weight and dimensions.

The plant 1 includes a first forming unit 2 for forming a plurality of first glass gobs and a plurality of second glass gobs indicated 3 and 4 respectively, of which the gobs 3 are intended to form the articles 1a and have a weight and a shape different from those of the gobs 4 which are, instead, intended to form the articles 1b.

The plant 1 further includes a second forming unit 5 for forming, simultaneously, a plurality of first orderly successions 5a of articles 1a and a plurality of second orderly successions 5b of articles 1b, in each of which the respective articles 1a, 1b are advanced in equispaced positions. In the particular embodiment described, the unit 5 includes a plurality of first forming sections, indicated 6, and a plurality of second forming sections, indicated 7, which are known per se and are each adapted to receive a respective succession of glass gobs 3, 4 and to advance respective orderly successions 5a, 5b of glass articles 1a, 1b to an annealing furnace, known and not illustrated, downstream of the unit 5 in the direction of advance of the articles 1a and 1b for stabilising the articles 1a and 1b.

The plant 1 finally includes a gob distributor 8, also known per se, which is interposed between the units 2 and 5 and has an inlet aperture 8a for the gobs 3 and 4 and a motor-driven output arm 8b controlled by a drive member 9 of the distributor 8 for advancing the gobs 3 and 4 towards the inlets 6a, 7a of the respective sections 6 and 7.

The forming unit 2 includes a container 10 for housing a mass (not illustrated) of molten glass, the container 10 having an aperture 11 in its bottom 12, an extrusion plunger 13 of known type being located coaxially of the said aperture 11 and movable towards and away from the bottom 12 of the container 10 along a vertical line of action 14 to extrude a bead 15 of molten glass through the aperture 11, a shearing unit 16, also known per se, also being provided for cutting the bead 15 transversely to form the said gobs of glass 3 and 4.

In the particular embodiment described, the plunger 13 is movable along the line of action 14 by means of an actuator device 18, also known per se, adapted to reciprocate the plunger 13 between a higher travel limit position, or upper dead point (Figure 1), and a second, lower travel limit position, or lower dead point, in which a free end portion of the plunger 13 extends in a position adjacent the bottom 12 of the container 10. The actuator 18 includes a drive shaft 19 which extends parallel to the line of action 14, is slidable in a fixed support 20 and carries a support arm 21, an intermediate portion of which is adjustably connected to an upper end portion of the shaft 19, a free end portion of the support arm being connected to the upper end of the plunger 13 so as to support it.

The device 18 further includes a rocker arm 22 which has an intermediate portion pivoted on a fixed support member 23 by a pivot pin 24 which extends perpendicular to the line of action 14 and to the plane of Figure 1, the rocker arm being constituted by two L-shaped elements 25 (only one of which is visible in Figure 1) located side by side. Each L-shaped element 25 comprises first and second limbs substantially perpendicular to each other and indicated 26 and 27, of which the limb 26 is longer than the limb 27. The rocker arm 22 is coupled to the shaft 19 by a pair of connecting rods 28, only one of which is visible in Figure 1, each being pivoted at one end on the shaft 19 and at its opposite end on the end of the respective limb 26.

The rocker arm 22 is coupled at its end opposite that connected to the shaft 19 to a known actuator unit 29 arranged to pivot the rocker arm 22 itself in opposite senses about the axis of the pivot pin 24, the actuator unit preferably being of the type described and illustrated in European patent application EP-A-0 490 294

More particularly, the unit 29 is supported by a fixed plate 30 and includes a lead-screw linear actuator 31 and a motor 32 the output shaft of which is connected to an input shaft of the linear actuator 31 itself through a transmission (not illustrated) preferably of the cogged belt type. The actuator 31 includes a pair of output shafts 33 extending parallel to each other and perpendicular to the line of action 14 being axially slidable in respective guide bushes 35 in a fixed body 34 and connected together by a cross-member 36 including a fork 37. Each arm 38 of the fork 37 is pivotally connected to an end portion of a respective connecting rod 39, the opposite end portion of which is pivoted on a corresponding limb 27 of the rocker arm 22.

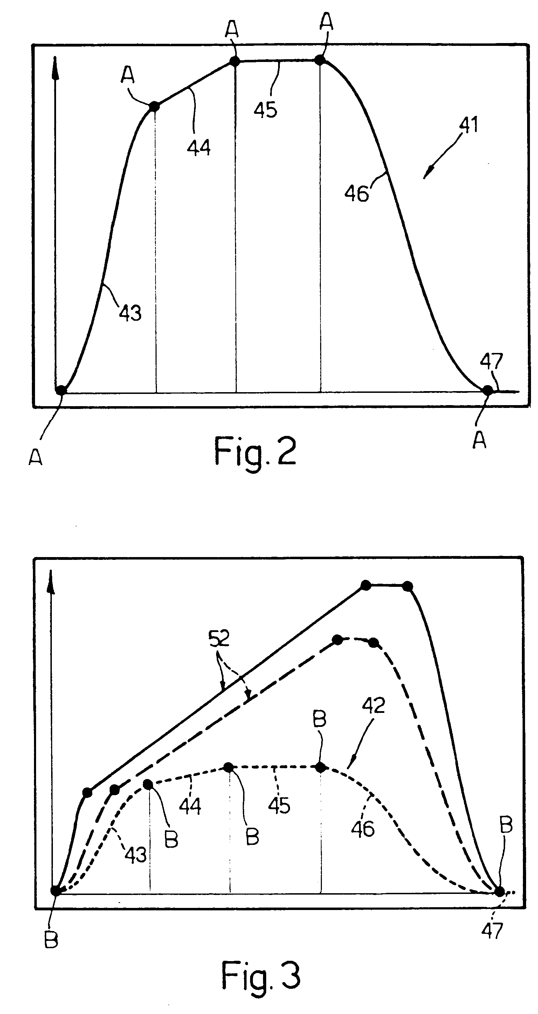

Still with reference to Figure 1, the unit 2 further incudes a drive and control unit 39a which in turn includes a drive unit 49 for driving both the motor 32 and the shearing unit 16 and a memory 40 in which, in the particular embodiment described, are stored data relating to two sets of reference positions or stops, indicated A and B respectively (Figures 2 and 3), of the plunger 13. The reference positions A and B constitute part of a first movement profile 41 and a second movement profile 42 respectively for the plunger 13 but do not define these movement profiles 41 and 42 completely but are rather identification references for these movement profiles 41, 42. More particularly, for each movement profile 41, 42, data are preferably stored relating to five reference positions A, B, the relative positions of which may be changed by an operator acting on a repositioning element 42a constituting part of the unit 39a so as to obtain movement profiles, and hence movements of the plunger 13, different from those illustrated in Figure 3.

The unit 39a further includes a known processor 42b which, in dependence on the data input, such as the period of the operating cycle, or production rate, of the plant 1, the travel of the plunger 13 and the position of the lower dead point of the plunger 13, generates and outputs continuously, during all the operative cycles of the plant 1, signals for controlling the movement of the plunger 13 through a plurality of further positions between each of the reference positions A, B and the respective next reference position in the cycle. These further positions are never stored in the memory 40, nor in any other memory, but are generated at the time during all the working cycles, in the course of which, together with the respective reference positions A, B, they define the movement profiles of the plunger 13 completely.

On the basis of what has just been explained and as illustrated in Figures 2 and 3, the movement profiles 41 and 42 traced on the respective space-time graphs are each constituted by five sections indicated 43, 44, 45, 46 and 47, each of which is terminated by two of the said reference positions A, B and is defined by a respective combination of the said further positions determined by the control signals output by the processor 42b. More particularly, of the sections 43, 44, 45, 46 and 47, the section 43 represents the law of movement relating to the rapid raising of the plunger 13 from its lowermost position and during which the bead 15 previously extruded is sheared. The section 44 represents the law of movement of the plunger 13 when the plunger 13 is close to its uppermost position while the section 46 represents the law of movement relating to the rapid descent of the plunger 13 from its uppermost position towards the bottom 12 of the container 10 and the sections 45 and 47 represent respective stationary conditions of the plunger 13 during which the plunger 13 is stopped at its uppermost position and its lowermost position respectively.

The unit 39a further includes a synchroniser element 51 which is connected electrically to the drive member 9, to the drive unit 49, to the processor 42b and to the memory 40 and is arranged to send a synchronising signal to the member 9 and to the unit 49 so as to keep the plunger 13, the shearing unit 16 and the distributor 8 exactly in synchronision with each other during the entire production cycle of the plant 1.

In use, it being wished for each of the various sections 6, 7 to advance a respective orderly succession 5a, 5b of articles 1a, 1b simultaneously, and criteria for optimising the travel of the arm 8b of the distributor 8 being observed, the sequence in which the glass gobs 3, 4 should be supplied to the unit 5 and, consequently, the law of movement of the arm 8b itself, are derived.

This supply sequence being taken into account, the unit 39a automatically chooses the movement profiles 41, 42 in dependence on the gobs 3, 4 to be formed or, rather, chooses one of the two sets of reference positions A, B stored in the memory 40. At this point, the unit 49 activates the motor 32 which, through the unit 29, moves the plunger 13 along its line of action 14 between the reference positions A, B in accordance with a law of movement which, as stated above, is determined at the time, that is cycle by cycle, and within each cycle section by section, by the processor 42b.

Immediately the bead 15 has been extruded, the unit 16, still controlled by the unit 49, shears the bead 15 transversely to form the desired gob; the gob is then advanced to the aperture 8a of the distributor 8 which, by means of the arm 8b, passes it to the inlet of the respective section 6, 7. At this point the arm 8b is moved towards the section 6, 7 which is to be supplied next and, if this section 6, 7 is the same as the section 6, 7 supplied just beforehand, the cycle is repeated in the manner just described and a gob 3, 4 which is exactly the same as the previous one is supplied to this latter section 6, 7; on the other hand, if the section 6, 7 to be supplied is different from that which has just been supplied, the unit 39a automatically changes the movement profile 41, 42, or rather the set of reference positions A, B, and the cycle is repeated following the same phases as described above but, at the end of this cycle, a gob which is different from that supplied previously in terms of weight, shape and dimensions is supplied to the section 6, 7.

During the formation of the gobs, the gobs 3 and 4 produced may be sheared twice. In other words, for each gob 3 and 4 the unit 16 may be actuated by the unit 49 to operate twice in rapid succession so as to shear any one gob twice in succession. Thus it is possible to cut away part of a gob, for example part having thermal characteristics different from those of the remaining part of the gob, and to remove it for example by a deflector (not illustrated).

From the above it will be clear that the plant 1 described enables two continuous orderly flows of articles 1a, 1b to be formed and advanced simultaneously to the annealing oven (not illustrated), of which the articles in one flow may be the same as the articles in the other flow in terms of weight, shape and dimensions or may be completely different from them. This characteristic of the plant 1 results essentially from the fact that both during the setting up of the plant 1 and during the actual operation of the plant 1, two different operating conditions may be selected extremely easily and, hence, gobs which differ from each other and are intended to form articles which are also different from each other may be formed in any succession. Not only this but, when the plant is working in one or other of the said operative conditions, the travel of the plunger 13 may further be varied by means of the processor 42a to vary the weight of the gobs produced correspondingly.

From the above it will thus be clear that the plant 1 described above enables more batches to be produced simultaneously than known plants, each batch including a smaller number of articles of relatively low unit cost and with the use, for each article, of a relatively small number of sections and, in particular, with the use of the same annealing oven (not illustrated) which, inter alia, is exactly the same as ovens used in known plants.

Finally, it will be clear from the above that the plant 1 described may be modified and varied without falling outside the field of protection of the present invention. In particular, the movement profiles 41 and 42 may be designed to differ from those described, for example, having profiles of the type indicated at 52 in Figure 3; not only that but the profiles 41, 42 may be modified by varying the number of reference positions A, B and hence the number of sections between the reference positions A, B in any one profile 41, 42. Moreover more than two sets of reference positions A, B may be stored in the memory 40 so as to enable the plunger 13 to be moved in accordance with various movement profiles so as to form more gobs, and hence more articles, that are different from each other. More particularly, there may be the same number of sets of reference positions A, B as the number of sections 6, 7 required so that, for each of the sections 6, 7, a glass gob is formed which differs from all the other gobs, with the consequent formation of respective articles which differ from all the other articles.

Finally the plunger 13 may be moved along the line of action 14 by an actuator other than that described.

## Claims

1. A plant (1) for forming glass articles comprising a first forming unit (2) for forming a plurality of gobs (3, 4) of glass; a second forming unit (5) for forming a plurality of glass articles (1a, 1b); and conveyor means (8) interposed between the first forming unit (2) and the second forming unit (5) for receiving the glass gobs (3, 4) in succession from the first forming unit (2) and for advancing these glass gobs (3, 4) to the second forming unit (5); the first forming unit (2) including first forming means (13, 16, 18, 39a) for forming first glass gobs (3) and at least second glass gobs (4) which differ from the first gobs (3); the second forming unit (5) including second forming means (6, 7) for forming simultaneously a first continuous orderly succession (5a) of first articles (1a) and at least one second continuous orderly succession (5b) of second articles (1b) different from the first articles (1a) the first forming unit (2) including a container (10) for receiving a mass of molten glass, and the first forming means (13, 16, 18, 39a) including extruder means (13) associated with the container (10) for extruding a bead (15) of molten glass, cutting means (16) for cutting the bead (15) transversely and forming the first glass gobs (3) and second glass gobs (4), and drive and control means (39a, 49) for moving the extruder means (13) relative to the container (10) in accordance with a first movement profile (41) and at least a second movement profile (42) different from the first; the drive and control means (39a, 49) including synchroniser means (51) for synchronising at least the extruder means (13) and the shearing means (16), characterised in that the drive and control means (39a, 49) include memory means (40) for storing data relative to first (A) and second (B) reference positions of the extruder means (13), the first reference positions (A) and the second reference positions (B) constituting part of the first movement profile (41) and the second movement profile (42) respectively but not defining the movement profiles (41, 42) completely; the drive and control means (39a, 49) further including processor means (42b) for generating continuously control signals for guiding the extruder means (13) in accordance with sections (43, 44, 45, 46, 47) of the movement profiles (41, 42), each between one of the said reference positions (A, B) and an immediately adjacent reference position (A, B).

2. A plant according to Claim 1, characterised in that the drive and control means (39a, 49) include variator means (42a) for varying the relative positions of the first reference positions (A) and the second reference positions (B) with continuity.

3. A plant according to Claim 1 or Claim 2, characterised in that the movement profiles (41, 42) each include a respective five said reference positions (A, B).

4. A plant according to any one of Claims 1 to 3, characterised in that the second forming unit (5) includes at least a first forming section (6) and at least a second forming section (7) for forming respectively the first (5a) and the second (5b) orderly successions of glass articles (1a, 1b); a drive member (9) being connected to the synchroniser means (51) and being arranged to drive the conveyor means (8) to convey a plurality of first glass gobs (3) and second glass gobs (4) to the first forming section (6) and the second forming section (7) respectively.

## Patentansprüche

1. Anlage (1) zum Formen von Glasartikeln, aufweisend eine erste Formeinheit (2) zum Formen einer Mehrzahl von Tropfen aus Glas (3, 4); eine zweite Formeinheit (5) zum Formen einer Mehrzahl von Glasartikeln (1a, 1b); und eine Fördervorrichtung (8), die zwischen der ersten Formeinheit (2) und der zweiten Formeinheit (5) angeordnet ist, um die Glastropfen (3, 4) der Reihe nach von der ersten Formeinheit (2) aufzunehmen und diese Glastropfen (3, 4) zur zweiten Formeinheit (5) hin weiterzubewegen; wobei die erste Formeinheit (2) erste Formvorrichtungen (13, 16, 18, 39a) aufweist, die erste Glastropfen (3) und wenigstens zweite Glastropfen (4) formen, welche sich von den ersten Glastropfen (3) unterscheiden; wobei die zweite Formeinheit (5) zweite Formvorrichtungen (6, 7) aufweist, die gleichzeitig eine erste kontinuierliche, geordnete Reihenfolge (5a) erster Glasartikel (1a) und wenigstens eine zweite kontinuierliche, geordnete Reihenfolge (5b) zweiter Glasartikel (1b) formt, die sich von den ersten Artikeln (1a) unterscheiden; wobei die erste Formeinheit (2) einen Behälter (10), der eine Masse geschmolzenen Glases aufnimmt, und die ersten Formvorrichtungen (13, 16, 18, 39a) aufweist, die wiederum eine Extrudervorrichtung (13), die dem Behälter (10) zugeordnet ist, um eine Perle (15) geschmolzenen Glases zu extrudieren, eine Abtrennvorrichtung (16), die die Perle (15) quer abschneidet und die ersten Glastropfen (3) und die zweiten Glastropfen (4) bildet, und Antriebs- und Steuervorrichtungen (39a, 49) zur Bewegung der Extrudervorrichtung (13) relativ zum Behälter (10) in Übereinstimmung mit einem ersten Bewegungsprofil (41) und wenigstens einem zweiten Bewegungsprofil (42) aufweist, welches sich vom ersten unterscheidet; wobei die Antriebs- und Steuervorrichtungen (39a, 49) eine Synchronisationseinrichtung (51) aufweisen, die wenigstens die Extrudervorrichtung (13) und die Schneidvorrichtung (16) synchronisiert, dadurch gekennzeichnet, daß die Antriebs- und Steuervorrichtungen (39a, 49) einen Speicher (40) aufweisen, der Daten relativ zu ersten (A) und zweiten (B) Bezugspositionen der Extrudervorrichtung (13) speichert, wobei die erste Bezugsposition (A) und die zweite Bezugsposition (B) einen Teil des ersten Bewegungsprofils (41) bzw. des zweiten Bewegungsprofils (42) bilden, aber nicht vollständig die Bewegungsprofile (41, 42) definieren; wobei die Antriebs- und Steuervorrichtungen (39a, 49) weiterhin eine Prozessoreinrichtung (42b) aufweisen, die kontinuierlich Steuersignale erzeugt, um die Extrudervorrichtung (13) in Übereinstimmung mit den Abschnitten (43, 44, 45, 46, 47) der Bewegungsprofile (41, 42) zu leiten, wobei jeder zwischen einer der Bezugspositionen (A, B) und einer unmittelbar benachbarten Bezugspositionen (A, B) liegt.

2. Anlage gemäß Anspruch 1, dadurch gekennzeichnet, daß die Antriebs- und Steuervorrichtungen (39a, 49) eine Variationseinrichtung (42a) aufweisen, die die relativen Positionen der ersten Bezugspositionen (A) und der zweiten Bezugspositionen (B) kontinuierlich variiert.

3. Anlage gemäß Anspruch 1 oder Anspruch 2, dadurch gekennzeichnet, daß jedes der Bewegungsprofile (41, 42) jeweils fünf der Bezugspositionen (A, B) aufweist.

4. Anlage gemäß einem der Ansprüche 1 bis 3, dadurch gekennzeichnet, daß die zweite Formeinheit (5) wenigstens einen ersten Formbereich (6) und wenigstens einen zweiten Formbereich (7) zur Formung erster (5a) bzw. zweiter (5b) geordneter Reihen von Glasartikeln (1a, 1b) aufweist; wobei eine an die Steuereinrichtung (9) angeschlossene Synchronisationseinrichtung (51) angeordnet ist, um die Fördervorrichtung (8) zu steuern, die eine Mehrzahl erster Glastropfen (3) und zweiter Glastropfen (4) der ersten Formeinheit (6) bzw. der zweiten Formeinheit (7) zuführt.

## Revendications

1. Appareil (1) pour former des articles en verre comprenant une première unité de mise en forme (2) servant à former une pluralité de morceaux (3, 4) de verre; une seconde unité de mise en forme (5) servant à former une pluralité d'articles en verre (1a, 1b); et un moyen de transport (8) intercalé entre la première unité de mise en forme (2) et la seconde unité de mise en forme (5) pour recevoir les morceaux de verte (3, 4) provenant en série de la première unité de mise en forme (2) et faire avancer ces morceaux de verte (3, 4) vers la seconde unité de mise en forme (5); la première unité de mise en forme (2) incluant des premiers moyens de mise en forme (13, 16, 18, 39a) pour former des premiers morceaux de verre (3) et au moins des seconds morceaux de verre (4) différents des premiers morceaux (3); la seconde unité de mise en forme (5) incluant des seconds moyens de mise en forme (6, 7) pour former simultanément une première série ordonnée continue (5a) de premiers articles (1a) et au moins une seconde série ordonnée continue (5b) de seconds articles (1b) différents des premiers articles (1a);
la première unité de mise en forme (2) incluant un bac (10) pour recevoir une masse de verre fondu, et les premiers moyens de mise en forme (13, 16, 18, 39a) incluant un moyen d'extrusion (13) associé au bac (10) pour extruder un boudin (15) de verre fondu, un moyen de coupe (16) pour couper transversalement le boudin (15) et former les premiers morceaux de verre (3) et les seconds morceaux de verre (4), et des moyens de commande et de contrôle (39a, 49) pour déplacer le moyen d'extrusion (13) par rapport au bac (10) suivant une première courbe de mouvement (41) et au moins une seconde courbe de mouvement (42) différente de la première; les moyens de commande et de contrôle (39a, 49) incluant un moyen de synchronisation (51) pour synchroniser au moins le moyen d'extrusion (13) et le moyen de cisaillement (16),
caractérisé par le fait que les moyens de commande et de contrôle (39a, 49) incluent un moyen à mémoire (40) pour stocker des données relatives à des premières (A) et secondes (B) positions de référence du moyen d'extrusion (13), les premières positions de référence (A) et les secondes positions de référence (B) faisant partie respectivement de la première courbe de mouvement (41) et de la seconde courbe de mouvement (42), mais ne définissant pas complètement les courbes de mouvement (41, 42); les moyens de commande et de contrôle (39a, 49) incluant en outre un moyen à processeur (42b) pour générer continument des signaux de commande destinés à guider le moyen d'extrusion (13) suivant des sections (43, 44, 45, 46, 47) des courbes de mouvement (41, 42), comprises chacune entre l'une desdites positions de référence (A, B) et une position de référence (A, B) immédiatement adjacente.

2. Appareil selon la revendication 1, caractérisé par le fait que les moyens de commande et de contrôle (39a, 49) incluent un moyen à variateur (42a) pour faire varier les positions relatives des premières positions de référence (A) et des secondes positions de référence (B) de manière continue.

3. Appareil selon la revendication 1 ou 2, caractérisé par le fait que les courbes de mouvement (41, 42) incluent chacune cinq desdites positions de référence (A, B) respectives.

4. Appareil selon l'une quelconque des revendications 1 à 3, caractérisé par le fait que la seconde unité de mise en forme (5) inclut au moins une première section de formage (6) et au moins une seconde section de formage (7) servant à former respectivement les premières (5a) et secondes (5b) séries ordonnées d'articles en verre (1a, 1b); un organe de commande (9) étant connecté au moyen de synchronisation (51) et étant agencé pour amener le moyen de transport (8) à transporter une pluralité de premiers morceaux de verre (3) et de seconds morceaux de verre (4) respectivement vers la première section de formage (6) et la seconde section de formage (7).
